# EUROPEAN PATENT SPECIFICATION

(11) **EP 2 430 906 B1**
(45) Date of publication and mention of the grant of the patent: **02.10.2013**
(21) Application number: 11180879.6
(22) Date of filing: 12.09.2011
(51) Int. Cl.: A01F 15/08, F16H 1/22

(54) **Baling press**
Ballenpresse
Presse à balles

(30) Priority: 21.09.2010 IT MO20100262
(43) Date of publication of application: 21.03.2012
(73) Proprietor: Comer Industries S.p.A., 20145 Milano (IT)
(72) Inventor: Tenca, Gianni, 46019 VIADANA MN (IT); Brunazzi, Achille, 42044 GUALTIERI, Frazione SANTA VITTORIA RE (IT)
(74) Representative: Modiano, Micaela Nadia

(56) References cited:
- EP-A1- 1 350 425
- EP-A2- 0 896 922
- WO-A2-2008/060274

## Description

The present invention relates to a baling press with reduction gear assembly particularly for the transmission of high power levels (see EP1 350 425A).

Currently, for the baling of grass-like material originating from the mowing of crops of various kinds, such as for example grass or hay, baling presses are known which are constituted essentially by a prism-shaped forming chamber in which the material to be compacted is introduced and in which a pressing piston can slide which presses periodically the material introduced in the forming chamber until said chamber is completely full and a prism-shaped bale of pressed material is formed.

More precisely, the pressing piston can slide alternately from a bottom dead center position to a top dead center position so as to allow filling of the forming chamber with the material to be compacted, during the stroke between the top dead center and the bottom dead center, and so as to allow pressing of the material to be compacted into bales, during the stroke between the bottom dead center and the top dead center.

These baling presses are generally provided with wheels adapted to make it possible to tow them by means of a tractor or the like on a field worked previously by mowing machines or the like and therefore covered with mowed grass-like material.

By means of adapted gathering systems arranged in series with adapted cutting elements, the grass-like material that is present on the field is gathered, shredded and introduced in the forming chamber so that it can be pressed and baled in bales which are then unloaded automatically from the baling press and left on said field.

More precisely, these baling presses are actuated by means of a Cardan shaft which is connected to the power take-off of the tractor and have a reduction assembly in input which transmits motion to the moving parts of the baling press.

Owing to the great force to be transmitted to the piston during pressing, the reduction assemblies are generally quite large and heavy.

For example, a typical reduction unit for this use generally has a first reduction stage that is defined by a pair of bevel gears and one or more reduction stages defined by pairs of cylindrical gears.

Regardless of the number of stages present, the final gear system in any case has a gear of considerable size and weight, which is keyed on an output shaft with which the mechanisms responsible for the motion of the pressing piston are associated.

Generally, two cranks are keyed on the output shaft and, by means of a pusher crank system, actuate with an alternating translational motion the piston in the forming chamber.

Moreover, at the intermediate shafts of the reduction assembly there can be secondary outputs for the actuation of auxiliary elements.

These baling presses of the known type are not free from drawbacks, which include the fact that the reduction assembly is considerably large, bulky and heavy because it has to transmit high power levels in order to allow the forming of the bales.

More precisely, these considerable dimensions, bulk and weight are due to the gear that is keyed on the output shaft, since by being the slowest gear of the reduction assembly it has a very large diameter and a face width that is proportional to the maximum force that can be transmitted during the bale forming process.

The aim of the present invention is to provide a baling press with a reduction gear assembly, particularly for the transmission of high power levels, that has smaller dimensions and lower weights than the background art, so as to reduce the overall weight of the machine on which it is installed and thus improve its efficiency.

Within this aim, an object of the present invention is to provide a baling press with a reduction gear assembly that makes it possible to reduce the CO₂ emissions of the tractor that tows the machine on which it is installed thanks to its weight reduction.

Another object of the present invention is to provide a baling press with a reduction gear assembly that is economically competitive with respect to those of the background art.

In accordance with the invention, there is provided a baling press with a reduction gear assembly as defined in the appended claims.

Further characteristics and advantages of the present invention will become more apparent from the detailed description of two preferred but not exclusive embodiments of a reduction gear assembly, particularly for the transmission of high power levels, illustrated by way of non-limiting example in the accompanying drawings, wherein:
Figure 1 is a perspective view of a first embodiment of the reduction gear assembly for a baling press particularly for the transmission of high power levels, according to the invention;
Figure 2 is a lateral elevation view of the reduction gear assembly shown in Figure 1;
Figure 3 is a front elevation view of the reduction gear assembly shown in Figure 1;
Figure 4 is a perspective view of a second embodiment of the reduction gear assembly for a baling press particularly for the transmission of high power levels, according to the invention;
Figure 5 is an enlarged-scale detail perspective view of the output gear of the reduction gear assemblies shown in Figures 1 and 4.

With particular reference to the cited figures, the reduction gear assembly for a baling press, particularly for the transmission of high power levels, generally designated by the reference numerals 1a and 1b in the two proposed embodiments, comprises at least one driving shaft 2 and at least one driven shaft 4 which are kinematically connected to each other by transmission means 5a or 5b which are mutually non-coaxial and preferably parallel.

According to the invention, the transmission means 5a and 5b of both proposed embodiments comprise a plurality of kinematic chains which are arranged in parallel to each other and are adapted to distribute the power that can be transmitted from the driving shaft 2 in a plurality of parallel kinematic paths before reaching the driven shaft 4.

More precisely, as will become more apparent hereinafter, each kinematic chain is connected kinematically to a single driven gear 6, which is provided both by the transmission means 5a and by the transmission means 5b and is keyed onto the driven shaft 4.

Furthermore, for allowing the distribution of the power that can be transmitted from the driving shaft 2 to the driven shaft 4 among the various kinematic chains, there are torque distribution means 7a or 7b which are interposed between said driven shaft and the kinematic chains.

More precisely, in the proposed embodiments, there are at least one first kinematic chain and at least one second kinematic chain, which are in parallel to each other and are provided with the same transmission ratio and the power that can be transmitted from the driving shaft 2 to the driven shaft 4 is distributed equally through the first kinematic chain and through the second kinematic chain.

It is noted that the driving shaft 2 can constitute the input shaft to the reduction gear assembly 1a or 1b, or, as shown in the figures, said assembly can have at least one reduction stage upstream of the driving shaft 2, a distinct input shaft being therefore provided which is connected kinematically to said driving shaft by means of at least one gear system.

The input shaft can be equally parallel or perpendicular to the driving shaft 2; in the latter case, the gear system is of the bevel gear type.

In particular, in the embodiments shown, the rotation axis 3a of the input shaft 3 is perpendicular to the rotation axis 2a of the driving shaft 2 and there is a single reduction stage upstream of said driving shaft, which constitutes its output shaft and is constituted by a bevel gear system formed by the bevel gears 8 and 9, which are keyed respectively on the input shaft 3 and on the driving shaft 2.

Moreover, the driven shaft 4 can constitute the output shaft of the reduction gear assembly 1a and 1b and can be connected directly to the user device, as shown in the figures, or the assembly itself can have at least one reduction stage downstream of the driven shaft 4, a distinct output shaft being therefore defined which is connected kinematically to said driven shaft by means of at least one gear system.

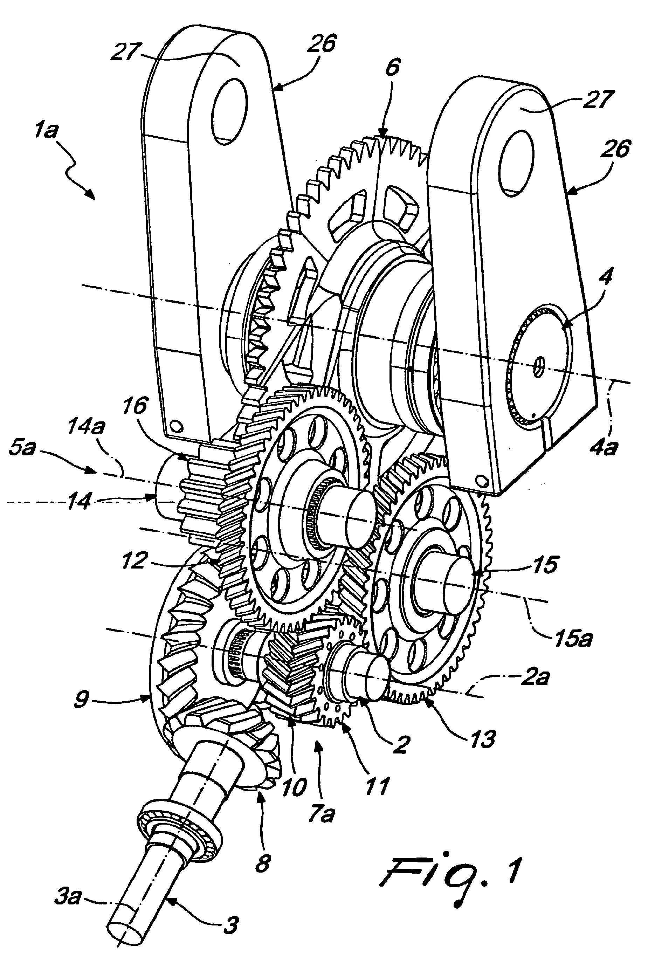

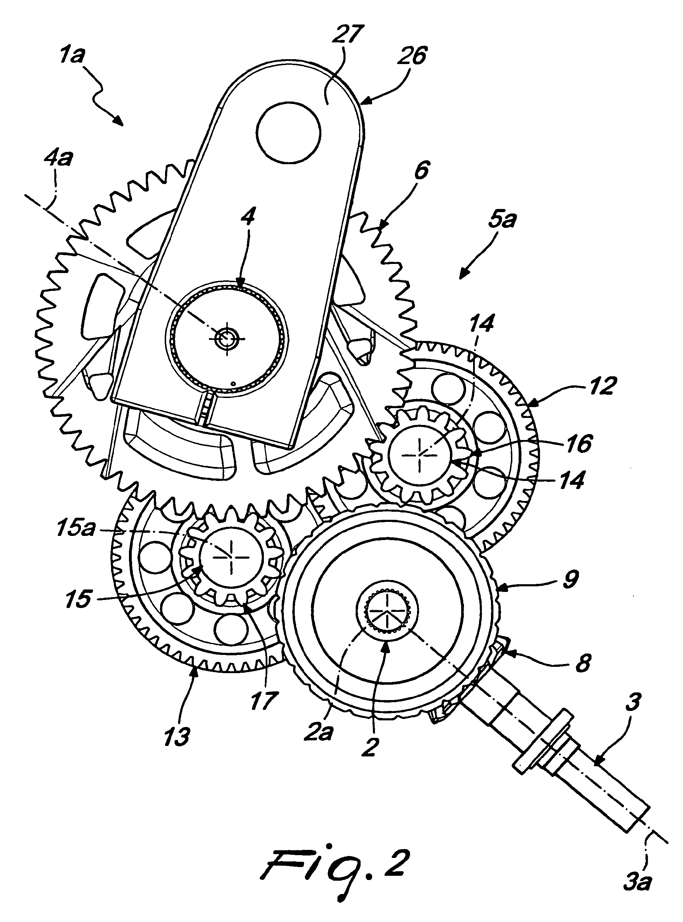

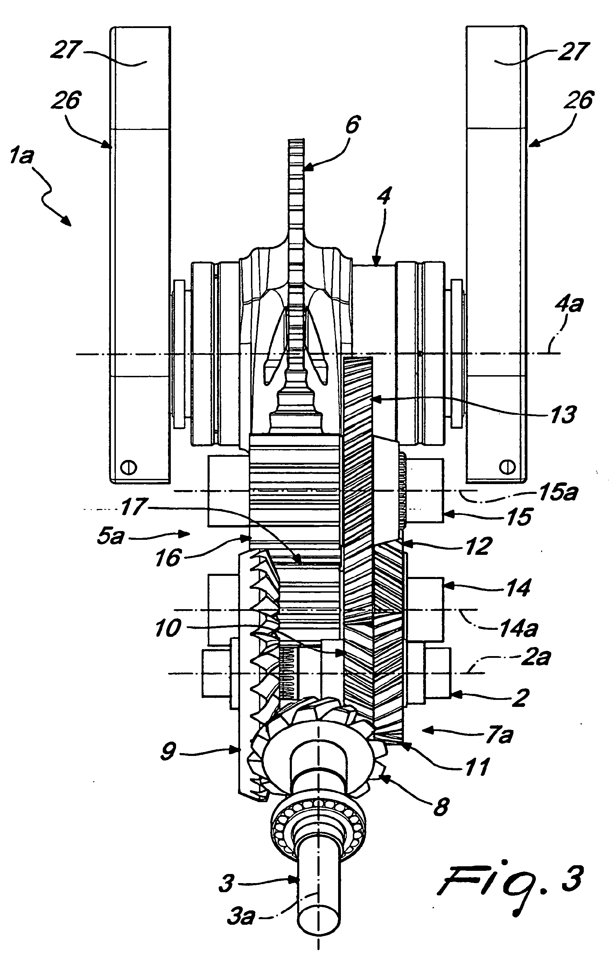

With reference to figures 1 to 3, the torque distribution means 7a comprise at least two first moving gears 10, 11 of the cylindrical type with helical teeth with mutually opposite helices, which rotate jointly with the driving shaft 2, float with respect to it and mesh respectively with at least two first intermediate gears 12, 13, which belong respectively to the two kinematic chains and are keyed respectively on at least two intermediate shafts 14 and 15 with rotation axes 14a and 15a which are parallel to the rotation axis 2a of the driving shaft 2.

More precisely, the two first moving gears 10, 11 are jointly connected to each other in rotation and translational motion respectively about and along the rotation axis 2a of the driving shaft 2.

Each provided kinematic chain comprises at least one second intermediate gear 16 or 17, which is keyed on the respective intermediate shaft 14 or 15 and meshes with the driven gear 6.

In this manner, meshing occurs on two different axes and since the first moving gears 10 and 11 float with respect to the driving shaft 2 they can move axially along the axis 2a so as to self-center in the only kinematically admissible position of equilibrium, i.e., the one in which the axial thrusts caused by the helix balance out.

More precisely, balanced axial thrusts are matched by tangent thrusts and therefore, with equal pitch circles, torques which are balanced.

With this configuration, the power that can be transmitted by the driving shaft 2 is distributed equally over the two intermediate rotation axes 14a and 15a and is then recomposed on the driven shaft 4.

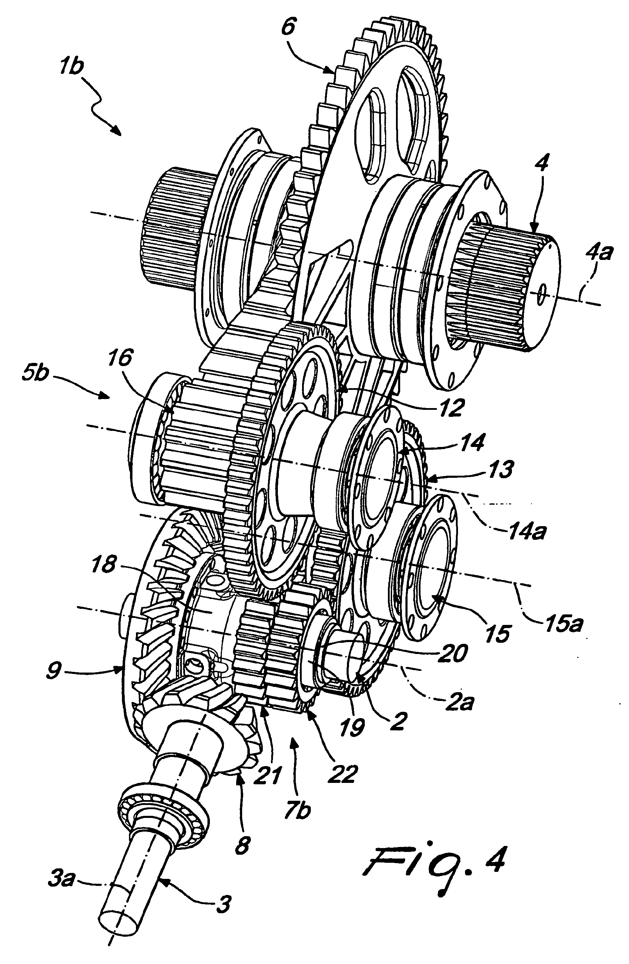

With reference to Figure 4, the torque distribution means 7b comprise at least one torque distribution unit 18, which is associated with the driving shaft 2 and has at least two coaxial shafts 19 and 20, which are kinematically associated respectively with the two kinematic chains by means of at least two second moving gears 21 and 22, which in this case are of the cylindrical type with straight teeth, are keyed respectively on the two coaxial shafts 19 and 20 and mesh respectively with the first intermediate gears 12 and 13, also of the cylindrical type and belonging respectively to the kinematic chains and keyed respectively on the two intermediate shafts 14 and 15.

In order to ensure an equal division of the torque over the two teeth of the driven gear 6, also in this second embodiment the torque must be divided equally between the two intermediate rotation axes 14a and 15a.

The minimal and inevitable differences in geometry between the two gears of the two kinematic chains would in fact cause only one of them to work.

Conveniently, the torque distribution unit 18 can be a differential device with gear systems or a gearless differential device or another torque distribution unit of a known type, but with elements adapted to divide the torque over two outputs connected respectively to the second moving gears 21 and 22.

As regards the driven gear 6, it can be of the cylindrical or helical type and can advantageously have a face width which is variable along its pitch circle 6a.

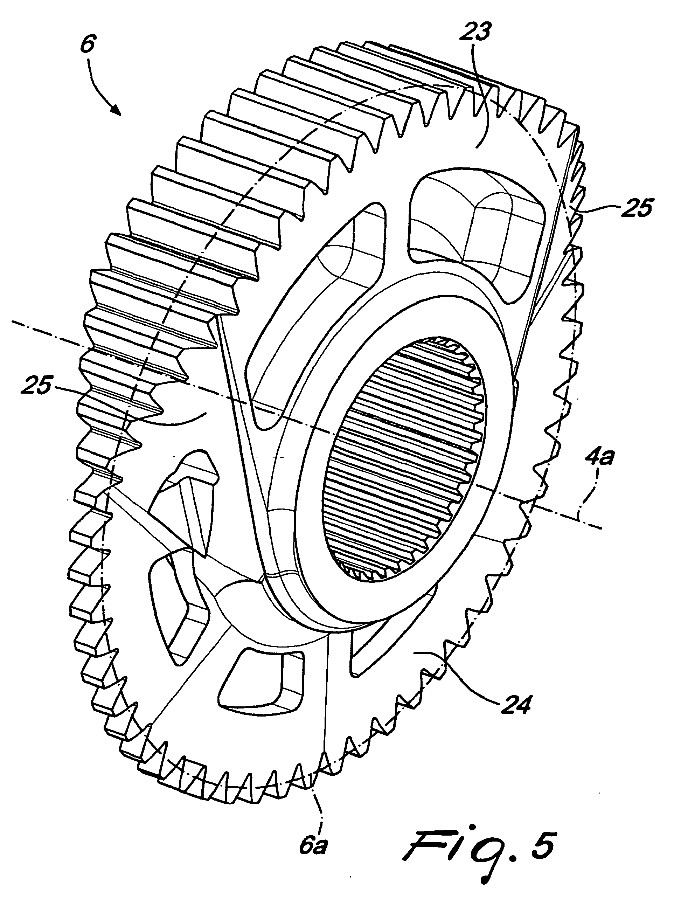

More precisely, with particular reference to Figure 5, in the proposed embodiments the driven gear 6 comprises a first circular sector 23, which has a constant face width along the pitch circle 6a, and at least one second circular sector 24, whose face width along the pitch circle 6a is constant and larger than the face width of the first circular sector 23.

This solution, as will become more apparent hereinafter, is useful if the user device connected to the reduction gear assembly 1a or 1b is of the type with power peaks.

The face widths related to the two circular sectors 23 and 24, their angular width and the number of angular sectors having a larger face width depend respectively on the value, duration and number of the peaks of power demanded by the user device to which the reduction gear assembly 1a and 1b is connected.

Advantageously, for following the power curve of the user device, third circular sectors 25 are comprised between the first circular sector 23 and the second circular sector 24 and have a face width that is variable along the pitch circle 6a of the driven gear 6 from a minimum value, which is equal to the face width of the first circular sector 22, to a maximum value, which is equal to the face width of the second circular sector 23.

As has been mentioned, the reduction gear assemblies 1a and 1b are used, according to the invention, in a baling press, not shown, particularly for pressing grass-like material and the like into prism-shaped bales, comprising a forming chamber that can be filled with material to be pressed and a pressing piston that can move alternately in the forming chamber from a top dead center to a bottom dead center.

The movement of the piston, which is required for the pressing of the material to be pressed, can be provided by means of a crank system 26, which can be associated with a rotating driving shaft, connected directly to the power take-off of the tractor that tows the baling press, by means of said reduction gear assembly 1a or 1b.

More precisely, the rotating driving shaft is functionally associated with the input shaft 3, if provided, or directly with the driving shaft 2, and the crank system 26 comprises at least one crank 27 or, as shown in the cited figures, two cranks 27 which are keyed on the driven shaft 4 of the reduction gear assemblies 1a and 1b and are connected directly to the pressing piston.

The periodic development of the power required by the presser piston of the baling press is such as to define a single power peak in the pressing step, differently from the rest of the stroke of the presser piston, which requires less power, needed only to entrain the material to be pressed.

Because of this, the reduction gear assemblies 1a and 1b have a single circular sector 24 and are installed on the baling press so that the second circular sector 24, which has the greatest face width, starts meshing at the beginning of the pressing of the material to be pressed and ceases meshing at the end of the pressing of said material to be pressed.

In practice it has been found that the baling press with the reduction gear assembly, particularly for the transmission of high power levels, according to the present invention, fully achieves the intended aim and objects, since it makes it possible to reduce considerably its dimensions and weight, as well as its space occupation, distributing the power to be transmitted over a plurality of mutually parallel kinematic chains which end in gears that mesh simultaneously on a single gear, which is connected directly to the user device or to a downstream reduction stage.

If the driven gear is the output gear and therefore the one that is subjected to the highest torque, it is also the biggest and most massive. Having two meshing teeth means that it is possible to size the gear system to a torque that is half the nominal one. The consequent bulk reduction allows a drastic reduction in the weight of said gear systems and of the castings.

This advantage in terms of weight and size increases as the reduction ratio increases. As the reduction ratio increases, in fact, the pitch circle of the output gear increases.

Moreover, a weight reduction contributes to fuel energy saving, with an associated reduction in CO₂ emissions, on the part of the tractor that tows the baling press according to the invention.

This weight reduction and the advantages that derive from it are furthermore achieved by the use of an output gear that has a tooth size which is variable as a function of the power curve of the user device with which it is associated.

The reduction gear assembly, particularly for the transmission of high power levels, thus conceived is susceptible of numerous modifications and variations within the scope of the claims.

All the details may furthermore be replaced with other technically equivalent elements.

In practice, the materials used, as long as they are compatible with the specific use, as well as the contingent shapes and dimensions, may be any according to the requirements and the state of the art.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A baling press, particularly for pressing grass-like material and the like into prism-shaped bales, comprising
a forming chamber which can be filled with material to be pressed and a pressing piston that can move in a reciprocating manner in said forming chamber from a top dead center to a bottom dead center to press said material to be pressed by means of a crank system (26) associated with a rotating driving shaft, and
a reduction gear assembly (1a, 1b) which is interposed between said rotating driving shaft and said crank system (26),
said reduction gear assembly (1a, 1b) comprising at least one driving shaft (2) and at least one driven shaft (4), which are kinematically connected to each other by transmission means (5a, 5b),
chracterized in that said transmission means (5a, 5b) comprise at least one first kinematic chain and at least one second kinematic chain, which are parallel to each other and have the same transmission ratio, between said at least one driving shaft (2) and said kinematic chains there being interposed torque distribution means (7a, 7b) which are adapted to distribute the power that can be transmitted from said at least one driving shaft (2) to said at least one driven shaft (4) partly through said at least one first kinematic chain and partly through said at least one second kinematic chain, said transmission means (5a, 5b) comprising a single driven gear (6), which is keyed onto said at least one driven shaft (4) and which is kinematically connected to said at least two kinematic chains, the driving shaft (2) and the driven shaft (4) being mutually non-coaxial,
said torque distribution means comprising: (7a) at least two first moving gears (10, 11) of the cylindrical type with helical teeth with mutually opposite helices, which rotate jointly with said driving shaft (2) and float with respect to it and mesh respectively with at least two first intermediate gears (12, 13), which belong respectively to said kinematic chains and are keyed respectively on at least two intermediate shafts (14, 15) with rotation axes (14a, 15a) which are parallel to the rotation axis (2a) of said driving shaft (2); or (7b) at least one torque distribution system (18), which is associated with said driving shaft (2) and is provided with at least two coaxial shafts (19, 20) which are kinematically associated respectively with said kinematic chains by means of at least two second moving gears (21, 22), which are keyed respectively on said coaxial shafts (19, 20) and mesh respectively with at least two first intermediate gears (12, 13) that belong respectively to said kinematic chains and are keyed respectively on at least two intermediate shafts (14, 15) whose rotation axes (14a, 15a) are parallel to the rotation axis (2a) of said coaxial shafts (19, 20),
each one of said kinematic chains comprising at least one second intermediate gear (16, 17), which is keyed on the respective shaft of said intermediate shafts (14, 15) and meshes with said driven gear (6), the second intermediate gears (16, 17) of each kinematic chain simultaneously meshing with said driven gear (6),
said rotating driving shaft being functionally associated with said input shaft (2 or 3) and said crank system (26) comprising at least one crank (27) which is keyed onto said at least one driven shaft (4).

2. The baling press according to claim 1, **characterized in that** said at least two first moving gears (10, 11) are jointly connected to each other in rotation and translational motion respectively about and along the rotation axis (2a) of said driving shaft (2).

3. The baling press according to claim 1, **characterized in that** said driven gear (6) has a face width which is variable along its pitch circle (6a).

4. The baling press according to claim 3, **characterized in that** said driven gear (6) comprises a first circular sector (23), which has a constant face width along the pitch circle (6a) of said driven gear (6), and a second circular sector (24), whose face width along the pitch circle (6a) of said driven gear (6) is constant and larger than the face width of said first circular sector (23).

5. The baling press according to claim 4, **characterized in that** third circular sectors (25) are comprised between said first circular sector (23) and said second circular sector (24) and have a face width that is variable along the pitch circle (6a) of said driven gear (6) from a minimum value, which is equal to the face width of said first circular sector (23), to a maximum value, which is equal to the face width of said second circular sector (24).

6. The baling press according to one or more of the preceding claims, **characterized in that** said driven gear (6) is of the cylindrical type,

7. The baling press according to one or more of the preceding claims, **characterized in that** said driven shaft (2) is the input shaft to said assembly.

8. The baling press according to one or more of the preceding claims, **characterized in that** it comprises at least one reduction stage upstream of said driving shaft (2), an input shaft (3) being further provided which is connected kinematically to said driven shaft (2) by means of at least one gear (8, 9).

9. The baling press according to one or more of the preceding claims, **characterized in that** said driven shaft (4) is the output shaft from said assembly.

10. The baling press according to one or more of the preceding claims, **characterized in that** it comprises at least one reduction stage downstream of said driven shaft (4), an output shaft being further provided which is connected kinematically to said driven shaft (4) by means of at least one gear.

## Patentansprüche

1. Ballenpresse, insbesondere für das Pressen von grasähnlichem Material und dergleichen zu prismenförmigen Ballen, die aufweist:
eine bildende Kammer, die mit zu pressendem Material gefüllt werden kann, und einen Presskolben, der sich in der bildenden Kammer in einer Hin- und Herbewegung von einem oberen Totpunkt zu einem unteren Totpunkt bewegen kann, um das zu pressende Material mittels eines mit einer drehenden, antreibenden Welle verbundenen Kurbelsystems (26) zu pressen, und
eine Untersetzungsgetriebeanordnung (1a, 1b), die zwischen der drehenden, antreibenden Welle und dem Kurbelsystem (26) angeordnet ist,
wobei die Untersetzungsgetriebeanordnung (1a, 1b) mindestens eine antreibende Welle (2) und mindestens eine angetriebene Welle (4) aufweist, die durch Übertragungseinrichtungen (5a, 5b) kinematisch miteinander verbunden sind,
**dadurch gekennzeichnet, dass** die
Übertragungseinrichtungen (5a, 5b) mindestens eine erste kinematische Kette und mindestens eine zweite kinematische Kette, die parallel zueinander verlaufen und dasselbe Übertragungsverhältnis haben, aufweisen, wobei zwischen der mindestens einen antreibenden Welle (2) und den kinematischen Ketten Drehmomentverteilungseinrichtungen (7a, 7b) angeordnet sind, die angepasst sind, die Leistung, die von der mindestens einen antreibenden Welle (2) auf die mindestens eine angetriebene Welle (4) übertragen werden kann, teils über die mindestens eine erste kinematische Kette und teils über die mindestens eine zweite kinematische Kette zu verteilen, wobei die Übertragungseinrichtungen (5a, 5b) ein einzelnes angetriebenes Zahnrad (6), das mit der mindestens einen angetriebenen Welle (4) verkeilt ist und das mit den mindestens zwei kinematischen Ketten kinematisch verbunden ist, aufweisen, wobei die antreibende Welle (2) und die angetriebene Welle (4) zueinander nicht koaxial sind,
wobei die Drehmomentverteilungseinrichtungen aufweisen: (7a) mindestens zwei erste sich bewegende Zahnräder (10, 11) in zylindrischer Ausführung mit Schrägverzahnung mit zueinander gegenläufigen Wendeln, die gemeinsam mit der antreibenden Welle (2) drehen und in Bezug auf sie Spiel haben und jeweils in mindestens zwei erste Zwischenzahnräder (12, 13) greifen, die jeweils zu den kinematischen Ketten gehören und jeweils mit mindestens zwei Zwischenwellen (14, 15) mit Drehachsen (14a, 15a), die parallel zur Drehachse (2a) der antreibenden Welle (2) verlaufen, verkeilt sind; oder (7b) mindestens ein Drehmomentverteilungssystem (18), das mit der antreibenden Welle (2) verbunden ist und mit mindestens zwei koaxialen Wellen (19, 20) versehen ist, die mittels mindestens zwei zweiter bewegender Zahnräder (21, 22) jeweils mit den kinematischen Ketten kinematisch verbunden sind, die jeweils mit den koaxialen Wellen (19, 20) verkeilt sind und jeweils in mindestens zwei erste Zwischenzahnräder (12, 13) greifen, die jeweils zu den kinematischen Ketten gehören und jeweils mit mindestens zwei Zwischenwellen (14, 15), deren Drehachsen (14a, 15a) parallel zur Drehachse (2a) der koaxialen Wellen (19, 20) verlaufen, verkeilt sind,
wobei eine der kinematischen Ketten mindesten ein zweites Zwischenzahnrad (16, 17) aufweist, das mit der jeweiligen der Zwischenwellen (14, 15) verkeilt ist und in das angetriebene Zahnrad (6) greift, wobei die zweiten Zwischenzahnräder (16, 17) jeder kinematischen Kette gleichzeitig in das angetriebene Zahnrad (6) greifen, wobei die drehende, antreibende Welle mit der Antriebswelle (2 oder 3) und dem Kurbelsystem (26), das mindestens eine mit der mindestens einen angetriebenen Welle (4) verkeilte Kurbel (27) aufweist, funktional verbunden ist.

2. Ballenpresse nach Anspruch 1, **dadurch gekennzeichnet, dass** die mindestens zwei ersten sich bewegenden Zahnräder (10, 11) gemeinsam miteinander in drehender und übertragender Bewegung um die Drehachse (2a) der antreibenden Welle (2) bzw. entlang derselben verbunden sind.

3. Ballenpresse nach Anspruch 1, **dadurch gekennzeichnet, dass** das angetriebene Zahnrad (6) eine Zahnbreite hat, die entlang ihrem Teilkreis (6a) veränderlich ist.

4. Ballenpresse nach Anspruch 3, **dadurch gekennzeichnet, dass** das angetriebene Zahnrad (6) einen ersten Kreissektor (23), der eine konstante Zahnbreite entlang dem Teilkreis (6a) des angetriebenen Zahnrades (6) hat, und einen zweiten Kreissektor (24), dessen Zahnbreite entlang dem Teilkreis (6a) des angetriebenen Zahnrades (6) konstant und größer als die Zahnbreite des ersten Kreissektors (23) ist, aufweist.

5. Ballenpresse nach Anspruch 4, **dadurch gekennzeichnet, dass** dritte Kreissektoren (25) sich zwischen dem ersten Kreissektor (23) und dem zweiten Kreissektor (24) befinden und eine Zahnbreite haben, die entlang dem Teilkreis (6a) des angetriebenen Zahnrades (6) von einem minimalen Wert, der gleich der Zahnbreite des ersten Kreissektors (23) ist, bis zu einem maximalen Wert, der gleich der Zahnbreite des zweiten Kreissektors (24) ist, veränderlich ist.

6. Ballenpresse nach einem oder mehr der vorangegangenen Ansprüche, **dadurch gekennzeichnet, dass** das angetriebene Zahnrad (6) zylindrisch ausgeführt ist.

7. Ballenpresse nach einem oder mehr der vorangegangenen Ansprüche, **dadurch gekennzeichnet, dass** die angetriebene Welle (2) die Antriebswelle zu der Anordnung ist.

8. Ballenpresse nach einem oder mehr der vorangegangenen Ansprüche, **dadurch gekennzeichnet, dass** sie mindestens eine Untersetzungsstufe vor der antreibenden Welle (2) aufweist, wobei ferner eine Antriebswelle (3) vorhanden ist, die mittels mindestens eines Zahnrades (8, 9) mit der angetriebenen Welle (2) kinematisch verbunden ist.

9. Ballenpresse nach einem oder mehr der vorangegangenen Ansprüche, **dadurch gekennzeichnet, dass** die angetriebene Welle (4) die Abtriebswelle aus der Anordnung ist.

10. Ballenpresse nach einem oder mehr der vorangegangenen Ansprüche, **dadurch gekennzeichnet, dass** sie mindestens eine Untersetzungsstufe hinter der angetriebenen Welle (4) aufweist, wobei ferner eine Abtriebswelle vorhanden ist, die mittels mindestens eines Zahnrades mit der angetriebenen Welle (4) kinematisch verbunden ist.

## Revendications

1. Presse à balles, en particulier pour presser une matière de type herbe et similaire en balles en forme de prisme, comprenant :
une chambre de formage qui peut être remplie avec la matière à presser et un piston de pression qui peut se déplacer selon un mouvement de va-et-vient dans ladite chambre de formage d'un point mort haut à un point mort bas pour presser ladite matière à presser au moyen d'un système à manivelle (26) associé avec un arbre d'entraînement de rotation, et
un ensemble motoréducteur (1a, 1b) qui est intercalé entre ledit arbre d'entraînement de rotation et ledit système à manivelle (26),
ledit ensemble motoréducteur (1a, 1b) comprenant au moins un arbre d'entraînement (2) et au moins un arbre entraîné (4), qui sont raccordés de manière cinématique l'un à l'autre par des moyens de transmission (5a, 5b),
**caractérisée en ce que** lesdits moyens de transmission (5a, 5b) comprennent au moins une première chaîne cinématique et au moins une seconde chaîne cinématique qui sont parallèles entre elles et ont le même rapport de transmission, entre ledit au moins un arbre d'entraînement (2) et lesdites chaînes cinématiques, on intercale des moyens de distribution de couple (7a, 7b) qui sont adaptés pour distribuer la puissance qui peut être transmise dudit au moins un arbre d'entraînement (2) audit au moins un arbre entraîné (4) partiellement par ladite au moins une première chaîne cinématique et partiellement par ladite au moins seconde chaîne cinématique, lesdits moyens de transmission (5a, 5b) comprenant une seule roue menée (6) qui est clavetée sur ledit au moins un arbre entraîné (4) et qui est raccordée de manière cinématique audite au moins deux chaînes cinématiques, l'arbre d'entraînement (2) et l'arbre entraîné (4) n'étant sensiblement pas coaxiaux,
lesdits moyens de distribution de couple comprenant : (7a) au moins deux premiers engrenages mobiles (10, 11) de type cylindrique avec des dents hélicoïdales avec des hélices mutuellement opposées qui tournent conjointement avec ledit arbre d'entraînement (2) et flottent par rapport à ce dernier et s'engrènent respectivement avec au moins deux premiers engrenages intermédiaires (12, 13) qui appartiennent respectivement auxdites chaînes cinématiques et sont clavetés respectivement sur au moins deux arbres intermédiaires (14, 15) avec des axes de rotation (14a, 15a) qui sont parallèles à l'axe de rotation (2a) dudit arbre d'entraînement (2) ; ou (7b) au moins un système de distribution de couple (18) qui est associé avec ledit arbre d'entraînement (2) et est prévu avec au moins deux arbres coaxiaux (19, 20) qui sont respectivement associés de manière cinématique avec lesdites chaînes cinématiques au moyen au moins deux seconds engrenages mobiles (21, 22) qui sont respectivement clavetés sur lesdits arbres coaxiaux (19, 20) et s'engrènent respectivement avec au moins deux premiers engrenages intermédiaires (12, 13) qui appartiennent respectivement auxdites chaînes cinématiques et sont clavetés respectivement sur au moins deux arbres intermédiaires (14, 15) dont les axes de rotation (14a, 15a) sont parallèles à l'axe de rotation (2a) desdits arbres coaxiaux (19, 20),
chacune desdites chaînes cinématiques comprenantau moins un second engrenage intermédiaire (16, 17) qui est claveté sur l'arbre respectif desdits arbres intermédiaires (14, 15) et s'engrène avec ladite roue menée (6), les seconds engrenages intermédiaires (16, 17) de chaque chaîne cinématique s'engrenant simultanément avec ladite roue menée (6),
ledit arbre d'entraînement de rotation étant fonctionnellement associé avec ledit arbre d'entrée (2 ou 3) et ledit système à manivelle (26) comprenant au moins une manivelle (27) qui est clavetée sur ledit au moins un arbre entraîné (4).

2. Presse à balles selon la revendication 1, **caractérisée en ce que** lesdits au moins deux premiers engrenages mobiles (10, 11) sont conjointement raccordés entre eux selon un mouvement de rotation et de translation respectivement autour et le long de l'axe de rotation (2a) dudit arbre d'entraînement (2).

3. Presse à balles selon la revendication 1, **caractérisée en ce que** ladite roue menée (6) a une largeur de face qui est variable le long de son cercle primitif (6a).

4. Presse à balles selon la revendication 3, **caractérisée en ce que** ladite roue menée (6) comprend un premier secteur circulaire (23) qui a une largeur de face constante le long du cercle primitif (6a) de ladite roue menée (6), et un deuxième secteur circulaire (24) dont la largeur de face le long du cercle primitif (6a) de ladite roue menée (6) est constante et supérieure à la largeur de face dudit premier secteur circulaire (23).

5. Presse à balles selon la revendication 4, **caractérisée en ce que** des troisièmes secteurs circulaires (25) sont compris entre ledit premier secteur circulaire (23) et ledit deuxième secteur circulaire (24) et ont une largeur de face qui est variable le long du cercle primitif (6a) de ladite roue menée (6) à partir d'une valeur minimum qui est égale à la largeur de face dudit premier secteur circulaire (23) jusqu'à une valeur maximum qui est égale à la largeur de face dudit deuxième secteur circulaire (24).

6. Presse à balles selon une ou plusieurs des revendications précédentes, **caractérisée en ce que** ladite roue menée (6) est de type cylindrique.

7. Presse à balles selon une ou plusieurs des revendications précédentes, **caractérisée en ce que** ledit arbre entraîné (2) est l'arbre d'entrée par rapport audit ensemble.

8. Presse à balles selon une ou plusieurs des revendications précédentes, **caractérisée en ce qu'**elle comprend au moins un étage de réduction en amont dudit arbre d'entraînement (2), on prévoit en outre un arbre d'entrée (3), qui est raccordé de manière cinématique audit arbre entraîné (2) au moyen d'au moins un engrenage (8, 9).

9. Presse à balles selon une ou plusieurs des revendications précédentes, **caractérisée en ce que** ledit arbre entraîné (4) est l'arbre de sortie par rapport audit ensemble.

10. Presse à balles selon une ou plusieurs des revendications précédentes, **caractérisée en ce qu'**elle comprend au moins un étage de réduction en aval dudit arbre entraîné (4), on prévoit en outre un arbre de sortie qui est raccordé de manière cinématique audit arbre entraîné (4) au moyen d'au moins un engrenage.
